# EUROPEAN PATENT SPECIFICATION

(11) **EP 4 386 225 B1**
(45) Date of publication and mention of the grant of the patent: **30.07.2025**
(21) Application number: 23214844.5
(22) Date of filing: 07.12.2023
(51) Int. Cl.: F16C 33/78, F16M 11/08, F16M 11/20

(54) **SWIVEL JOINT AND SUSPENSION ARM OF A DEVICE COMPRISING SUCH SWIVEL JOINT**
DREHGELENK UND AUFHÄNGUNGSARM EINER VORRICHTUNG MIT EINEM SOLCHEN DREHGELENK
JOINT TOURNANT ET BRAS DE SUSPENSION D'UN DISPOSITIF COMPRENANT UN TEL JOINT TOURNANT

(30) Priority: 15.12.2022 IT 202200025656
(43) Date of publication of application: 19.06.2024
(73) Proprietor: EIQ INDUSTRIAL S.R.L., 36015 Schio (VI) (IT)
(72) Inventor: DI LELIO, Diego, 36015 Schio, Vicenza (IT)
(74) Representative: Busana, Omar

(56) References cited:
- EP-B1- 3 249 250
- WO-A1-2005/010382
- CN-A- 114 017 618
- US-A1- 2014 361 606

## Description

### FIELD OF APPLICATION

The present invention relates to a swivel joint. In particular, the object of the present invention is a swivel joint for a suspension arm of a device, particularly adapted for applications in the area of food and/or health care.

### PRIOR ART

**As** is known, swivel joints that permit the rotation of a suspension arm essentially comprise a support base that is adapted for being connected to a surface and a rotating element whereto the support base is to be connected. Between the support base and the rotating element is provided a plain bearing (such as, for example, a bushing) or a rolling bearing in order to facilitate rotation between the support base and the rotating element.

One example of this type of joint is shown in the European patent EP 3249250 B1. The patent describes a joint comprising an external cylindrical element that is adapted for being arranged upon a surface of a machine and an internal cylindrical element that is adapetd for rotating with respect to the external cylindrical element. Two axially staggered ball bearings, which are substantially equal, are arranged between the two cylindrical elements.

The presence of the two axially staggered ball bearings and the particular conformation of the coupling between the internal and the external cylinder allow the joint to be particularly adapted for withstanding axial thrusts, radial thrusts, and bending stresses exerted by the arm at the end whereof the device is arranged.

This type of joint, even though it is particularly efficient with respect to the problems outlined above, has some critical issues from the point of view of hygiene in the field of applications relating to the food industry. There are in fact specific regulations for the food industry that relate to the mechanical components to be used. The object of these regulations is to make the components used within the industry free of critical issues from a hygiene perspective. One of the possible issues relates to the presence of metallic surfaces that are in contact or else facing therebetween in a particularly close manner, and that are exposed to an environment that is subject to regulatory restrictions.

The regulations require that those components that are exposed to the environment are not to have metal-to-metal surfaces that are in contact or close together, insofar as the fissure that forms therebetween would be exposed to an accumulation of material (for example liquids or dust), that could lead to the proliferation of bacteria and the subsequent contamination of the products.

For this reason the majority of metal-to-metal components are made inside the joint in such a way that they may not be exposed to the environment, and where this cannot be made the regulations require that between two metal surfaces a gasket should be interposed, made for example from a silicone material, in such a way that the problem of an accumulation of material within the fissure between the metal surfaces may be precluded.

### DISCLOSURE OF THE INVENTION

The need to solve the drawbacks and limitations mentioned with reference to the prior art is therefore felt.

The need is therefore felt to provide a swivel joint wherein the external structure thereof may be devoid of metal-to-metal interfaces, in particular between those components that are in rotation relative to each other.

Furthermore, the need is felt to provide a swivel joint that may be devoid of metal-to-metal interfaces and that retains unchanged the robustness and functionality thereof.

These needs are at least partially satisfied by a swivel joint according to claim 1, and by a suspension arm according to claim 11.

### DESCRIPTION OF THE DRAWINGS

Further features and advantages of the present invention will become more apparent from the following detailed description of preferred, non-limiting embodiments thereof, wherein:
- Figure 1 shows, in schematic form, an exploded perspective view of a swivel joint according to a possible embodiment of the present invention;

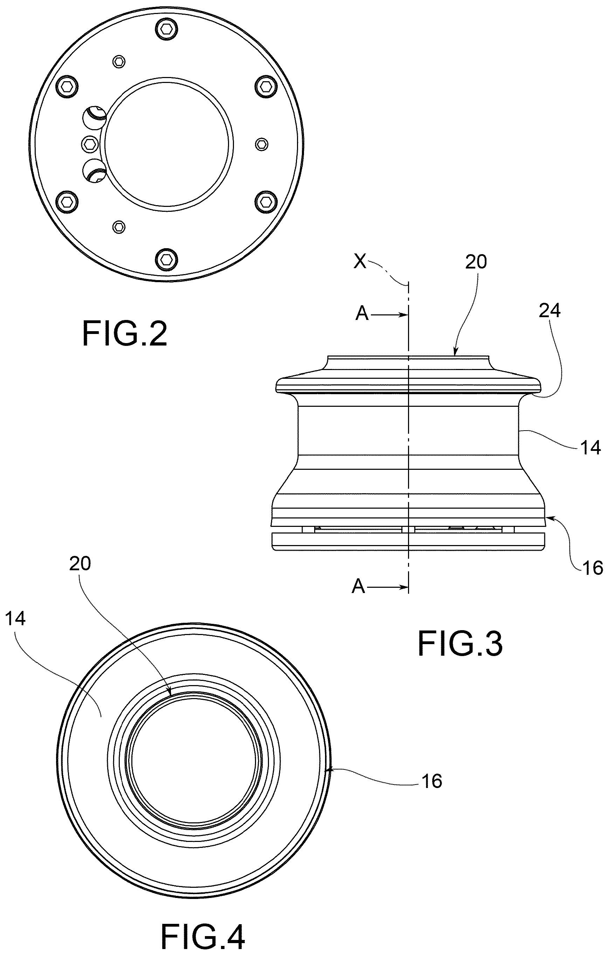

- Figure 2 shows, in schematic form, a plan view from below of a swivel joint according to a possible embodiment of the present invention;
- Figure 3 shows, in schematic form, a front view of a swivel joint according to a possible embodiment of the present invention;
- Figure 4 shows, in schematic form, a plan view from above of a swivel joint according to a possible embodiment of the present invention;
- Figure 5 shows, in schematic form, a longitudinal sectional view according to the section plane A-A of Figure 3, a swivel joint according to a possible embodiment of the present invention;
- Figure 6 shows a perspective view of a swivel joint according to a possible embodiment of the present invention;
- Figures 7 and 8 show, in schematic form, an enlarged portion of the longitudinal section of Figure 5, in particular in Figure 7 a detail has been removed; and
- Figure 9 shows, in schematic form, a suspension arm of a device comprising two swivel joints according to a possible embodiment of the present invention.

Elements or parts of elements common to the embodiments described hereinafter will be indicated with the same numerical references.

### DETAILED DESCRIPTION

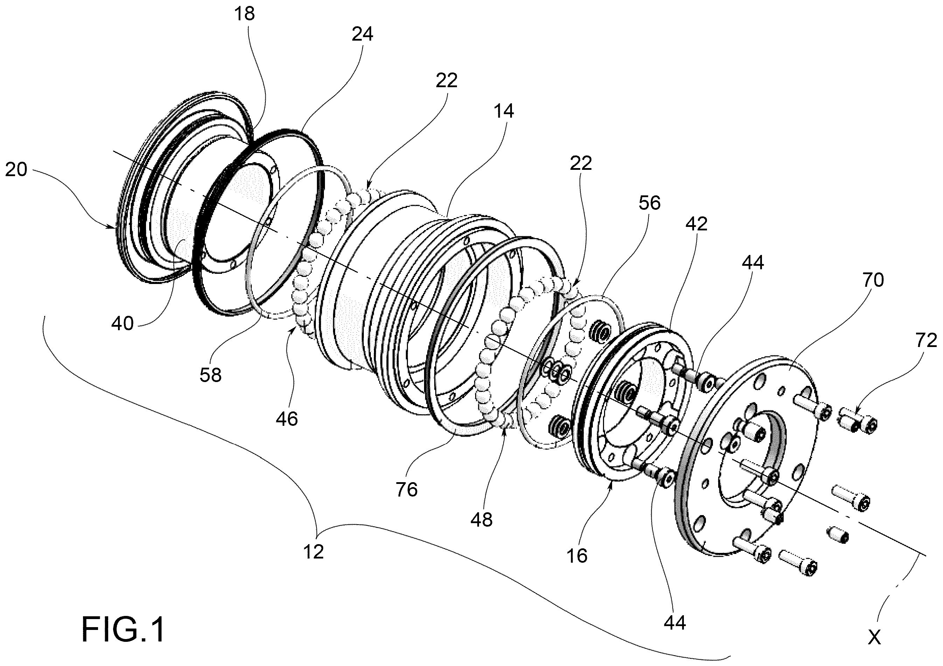

In Figure 1 a swivel joint according to the present invention is indicated with the reference numeral 12.

The swivel joint comprises an external cylindrical element 14 having a first external connection end 16, an internal cylindrical element 18 having a second external connection end 20.

Bearing means 22 are arranged between the external cylindrical element 14 and the internal cylindrical element 18 so as to identify a relative rotation axis x between the external cylindrical element 14 and the internal cylindrical element 18.

Furthermore, the internal cylindrical element 18 protrudes in a radial direction with respect to the external cylindrical element 14 making a radial seat 26 for a gasket 24, arranged between the external cylindrical element 14 and the internal cylindrical element 18.

In this way the only portion wherein a metal-to-metal fissure is envisaged is protected by means of the gasket 24.

Within this discussion the term radial direction signifies a direction that is substantially perpendicular to the direction of the longitudinal axis x.

According to a possible embodiment, the internal cylindrical element 18 may protrude in a radial direction with respect to the external cylindrical element 14 and comprises a first surface sealing surface 28 which radially faces a second sealing surface 30 arranged on the external cylindrical element 14 to make the radial seat 26 for the gasket 24.

In other words, the internal cylindrical element 18 protrudes radially in such a way that the gasket 24 may be arranged between a portion of the internal cylindrical element 18 that makes the most external part of the radial seat 26 and a portion of the external cylindrical element 14 that instead makes a more internal portion of the radial seat 26.

The gasket 24 may, for example, be made in silicone that is adapted for use with food.

According to a possible embodiment the internal cylindrical element 18 may be arranged with a head portion 32 that protrudes in a radial direction with respect to the external cylindrical element 14, being arranged with an end portion 34 protruding in the direction of the axis x on which the first sealing surface 28 is made.

The head portion 32 therefore comprises a portion that overlaps externally in a radial direction with respect to the external cylindrical element 14.

According to a possible embodiment, the radial seat 26 is arranged with a mouth 38 which is tapered so as to retain the gasket 24 in position once the external cylindrical element 14 and the internal cylindrical element 18 are coupled to each other.

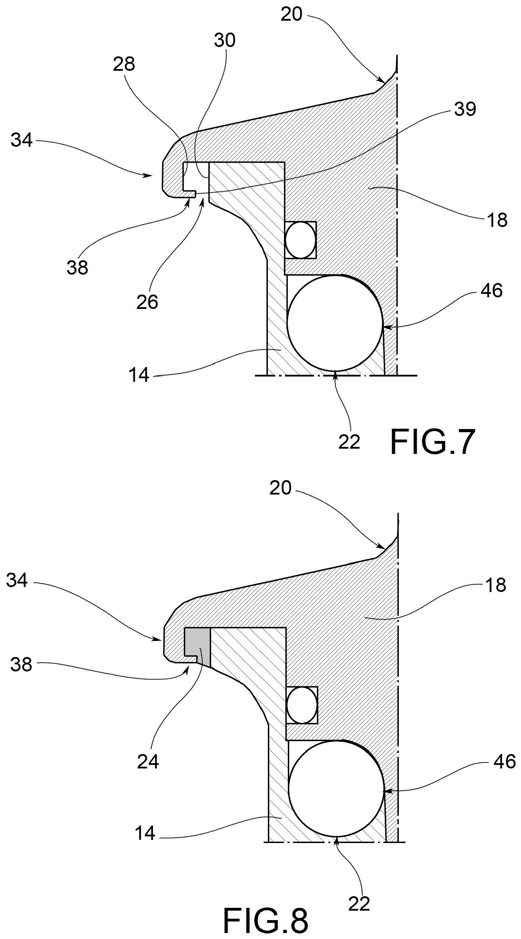

As may be seen in Figure 8, once the gasket 24 is inserted into the radial seat 26, any escape of the same from the same radial seat 26 may be impeded by the tapering which divides the portion of the internal cylindrical element 18 from the portion of the external cylindrical element 14 which are facing therebetween.

Advantageously, the tapered mouth 38 is obtained by means of an end portion 34 of the external cylindrical element 14, for example by means of an appendix 39 protruding in a radial direction towards the longitudinal axis x.

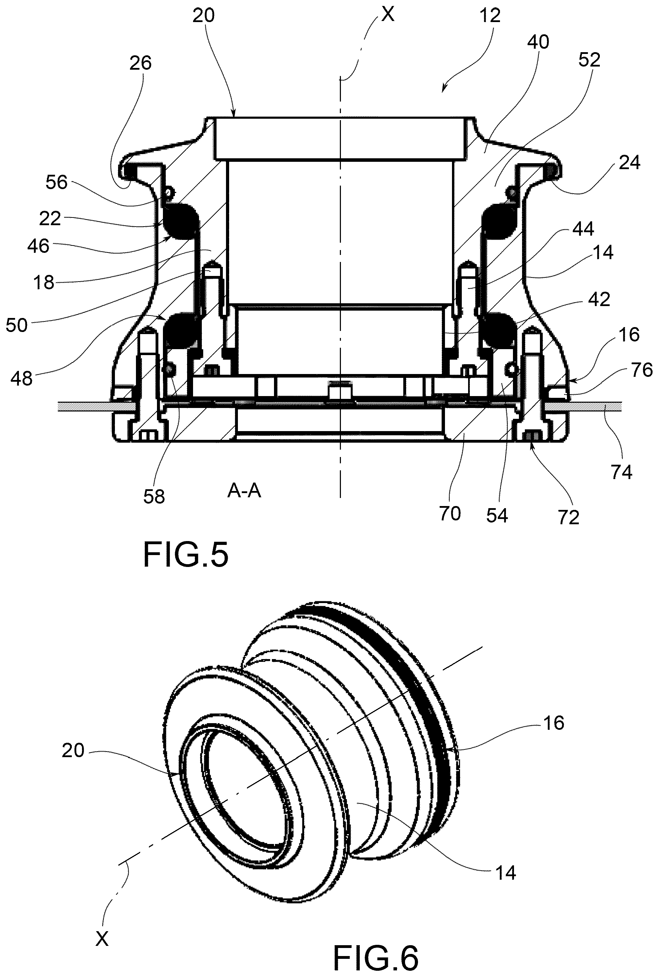

As may be seen from the section of Figure 5, the internal cylindrical element 18 may comprise a main body 40 and a bottom 42 connected to each other by means of screws 44.

According to a possible embodiment, the bearing means 22 may comprise two axially staggered ball bearings 46, 48.

As may be seen from the section in Figure 5, the external cylindrical element 14 and the internal cylindrical element 18 may be shaped to make the rolling tracks for the balls of the ball bearings 46, 48. In particular, the external cylindrical element 14 may be arranged with a portion of reduced internal diameter 50, and the internal cylindrical element 18 may be made with two portions of increased external diameter 52, 54 so that between the reduced diameter portion 50 and the increased diameter portions 52, 54 opposing tracks are made in an axial direction on which the balls of the ball bearings 46, 48 may roll.

According to one possible embodiment, a first portion of increased external diameter 52 may be arranged on the main body 40, whilst a second portion of increased external diameter may be arranged on the bottom 42. In this way the mounting of the swivel joint may be facilitated insofar as:
- in a first step the balls of the first bearing 46 may be arranged between the first portion of increased external diameter 52 and the portion of reduced internal diameter 50;
- subsequently the balls of the second bearing 48 are arranged between the portion of reduced internal diameter 50 and the second portion of increased external diameter 54 that is arranged upon the bottom 42 which is subsequently attached to the main body by screw means 44.

According to a possible alternative embodiment, the at least one bearing may be pre-mounted and arranged within a predetermined seat between the two cylindrical elements.

In accordance with a possible embodiment, the swivel joint 12 may comprise a fixing element 70, adapted to be connected to the first external connection surface 16, for example by screw means 72. As may be seen in Figure 5, the fixing element 70 may be arranged on the internal side of a surface 74 and blocked with respect to the first external connection surface 16 by screw means 72 passing through holes arranged on the surface 74.

As may be seen in the embodiment shown in Figure 5, the swivel joint 12 may comprise a connection gasket 76 adapted to be arranged between the external cylindrical element 14 and the surface 74 where the swivel joint is attached. The function of the connection gasket 76 is that of avoiding the formation of a metal-to-metal fissure between the surface 74 and the swivel joint for the same reasons mentioned above.

According to a possible embodiment, the connection to the second external connection end 20 may be accomplished by means of welding.

In alternative embodiments, the connection to the first external connection end 16 and to the second external connection end 20 may be performed using methods other than those indicated above but known of themselves to a person skilled in the art.

According to one possible embodiment, as may be seen in Figure 5 and in Figure 1, between the internal cylindrical element and the external cylindrical element, sealing rings 56, 58 may be arranged in sealing seats 60, 62 which may be made upon the internal cylindrical element 18 and/or upon the external cylindrical element 14.

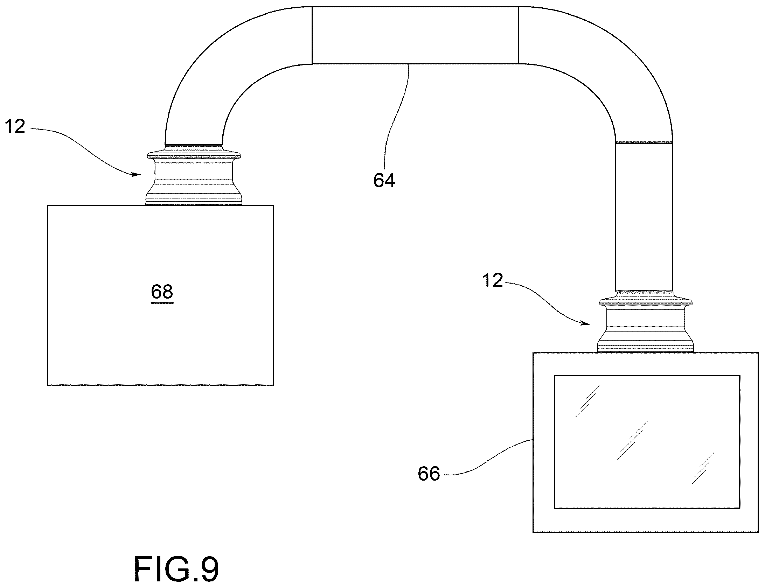

A possible application of the swivel joint 12 according to the invention is shows in Figure 9.

The swivel joint 12 may be used in a suspension arm 64 for a control panel 66 of a machine 68. According to a possible embodiment, the swivel joints 12 may be one arranged between a machine 68 and a suspension arm 64, and one arranged between a suspension arm 64 and a control panel 66.

The swivel joint may furthermore be advantageously used in situations wherein it is necessary to place two elements in rotational connection under special hygienic conditions.

The advantages that may be achieved with a swivel joint according to the present invention are therefore now apparent.

Firstly, a swivel joint is made available that may be used in environments wherein a hygiene regulation is envisaged which stipulates that there should be no metal surfaces close together.

Secondly, a device is made available that whilst suitable for use under particularly demanding hygienic conditions succeeds in being particularly functional.

A person skilled in the art will be able to make modifications to the embodiments described above and/or substitute described elements with equivalent elements, in order to satisfy particular requirements, without departing from the scope of the accompanying claims.

## Claims

1. Swivel joint (12) comprising an external cylindrical element (14) having a first external connection end (16), an internal cylindrical element (18) having a second external connection end (20), and bearing means (22) arranged between said external cylindrical element (14) and said internal cylindrical element (18) so as to identify a relative rotation axis (x);
a gasket (24) being provided between said external cylindrical element (14) and said internal cylindrical element (18); **characterised in that**
said internal cylindrical element (18) protruding in a radial direction with respect to said external cylindrical element (14) making a radial seat (26) for said gasket (24).

2. Swivel joint (12) according to the preceding claim, **characterised in that** said internal cylindrical element (18) protruding in a radial direction with respect to said external cylindrical element (14) comprises a first sealing surface (28) which radially faces a second sealing surface (30) arranged on said external cylindrical element (14) to make said radial seat (26) for said gasket (24).

3. Swivel joint (12) according to the preceding claim, **characterised in that** said internal cylindrical element (18) is arranged with a head portion (32) protruding in a radial direction with respect to said external cylindrical element (14), said head portion (32) being arranged with an end portion (34) protruding in the direction of the axis (x) on which said first sealing surface (28) is made.

4. Swivel joint (12) according to any one of the preceding claims, **characterised in that** said radial seat (26) is arranged with a tapered mouth (38) adapted to retain the gasket (24) in position.

5. Swivel joint (12) according to the preceding claim, **characterised in that** said tapering (26) is obtained by means of said end portion (34) of said external cylindrical element (14).

6. Swivel joint (12) according to any one of the preceding claims, **characterised in that** said internal cylindrical element (18) comprises a main body (40) and a bottom (42) connected to each other by means of screws (44).

7. Swivel joint (12) according to any one of the preceding claims, **characterised in that** said bearing means (22) comprise two axially staggered ball bearings (46, 48).

8. Swivel joint (12) according to the preceding claim, **characterised in that** said external cylindrical element (14) and said internal cylindrical element (18) are shaped to make the rolling tracks for the balls of the ball bearings (46, 48), said external cylindrical element (14) being arranged with a portion of reduced internal diameter (50), and said internal cylindrical element (18) being made with two portions of increased external diameter (52, 54) so that between the reduced diameter portion (50) and the increased diameter portions (52, 54) opposing tracks are made in an axial direction on which the balls of the ball bearings (46, 48) can roll.

9. Swivel joint (12) according to any one of the preceding claims, **characterised in that** it comprises a fixing element (70), adapted to be connected to the first external connection surface (16) by screw means (72).

10. Swivel joint (12) according to any one of the preceding claims, **characterised in that** said gasket is made of silicone suitable for food use.

11. Suspension arm (64) comprising at least one swivel joint (12) according to any one of the preceding claims, arranged for connection to a machine (68) and/or to a device (66).

## Patentansprüche

1. Drehgelenk (12), umfassend ein äußeres zylindrisches Element (14) aufweisend ein erstes äußeres Verbindungsende (16), ein inneres zylindrisches Element (18) aufweisend ein zweites äußeres Verbindungsende (20) sowie Lagermittel (22), die zwischen dem äußeren zylindrischen Element (14) und dem inneren zylindrischen Element (18) angeordnet sind, um eine relative Drehachse (x) zu identifizieren;
eine Dichtung (24), die zwischen dem äußeren zylindrischen Element (14) und dem inneren zylindrischen Element (18) vorgesehen ist ; **dadurch gekennzeichnet, dass**
das innere zylindrische Element (18) in einer radialen Richtung in Bezug auf das genannte äußere zylindrische Element (14) vorsteht und einen radialen Sitz (26) für die Dichtung (24) bildet.

2. Drehgelenk (12) nach dem vorhergehenden Anspruch, **dadurch gekennzeichnet, dass** das innere zylindrische Element (18), das in einer radialen Richtung in Bezug auf das äußere zylindrische Element (14) vorsteht, eine erste Dichtfläche (28) umfasst, die radial einer zweiten Dichtfläche (30) gegenüberliegt, die auf dem äußeren zylindrischen Element (14) angeordnet ist, um den radialen Sitz (26) für die Dichtung (24) zu bilden.

3. Drehgelenk (12) nach dem vorhergehenden Anspruch, **dadurch gekennzeichnet, dass** das innere zylindrische Element (18) mit einem Kopfabschnitt (32) angeordnet ist, der in einer radialen Richtung in Bezug auf das äußere zylindrische Element (14) vorsteht, wobei der Kopfabschnitt (32) mit einem Endabschnitt (34) angeordnet ist, der in Richtung der Achse (x) vorsteht, auf dem die erste Dichtfläche (28) ausgebildet ist.

4. Drehgelenk (12) nach einem der vorhergehenden Ansprüche, **dadurch gekennzeichnet, dass** der radiale Sitz (26) mit einer verjüngten Öffnung (38) angeordnet ist, die eingerichtet ist, die Dichtung (24) in Position zu halten.

5. Drehgelenk (12) nach dem vorhergehenden Anspruch, **dadurch gekennzeichnet, dass** die Verjüngung (26) mittels des Endabschnitts (34) des äußeren zylindrischen Elements (14) erhalten wird.

6. Drehgelenk (12) nach einem der vorhergehenden Ansprüche, **dadurch gekennzeichnet, dass** das innere zylindrische Element (18) einen Hauptkörper (40) und einen Boden (42) umfasst, die mittels Schrauben (44) miteinander verbunden sind.

7. Drehgelenk (12) nach einem der vorhergehenden Ansprüche, **dadurch gekennzeichnet, dass** die Lagermittel (22) zwei Kugellager (46, 48) umfassen, die axial zueinander versetzt sind.

8. Drehgelenk (12) nach dem vorhergehenden Anspruch, **dadurch gekennzeichnet, dass** das äußere zylindrische Element (14) und das innere zylindrische Element (18) geformt sind, sodass sie die Laufbahnen für die Kugeln der Kugellager (46, 48) bilden, wobei das äußere zylindrische Element (14) mit einem Abschnitt mit reduziertem Innendurchmesser (50) angeordnet ist und das innere zylindrische Element (18) mit zwei Abschnitten mit vergrößertem Außendurchmesser (52, 54) angeordnet ist, so dass gegenüberliegende Bahnen zwischen dem Abschnitt mit reduziertem Durchmesser (50) und den Abschnitten mit vergrößertem Durchmesser (52, 54) in axialer Richtung ausgebildet sind, auf denen die Kugeln der Kugellager (46, 48) rollen können.

9. Drehgelenk (12) nach einem der vorhergehenden Ansprüche, **dadurch gekennzeichnet, dass** es ein Befestigungselement (70) umfasst, das eingerichtet ist, mittels Schraubmitteln (72) mit der ersten äußeren Anschlussfläche (16) verbunden zu werden.

10. Drehgelenk (12) nach einem der vorhergehenden Ansprüche, **dadurch gekennzeichnet, dass** die Dichtung aus Silikon hergestellt wird, das für Lebensmittelanwendungen geeignet ist.

11. Aufhängungsarm (64), umfassend mindestens ein Drehgelenk (12) nach einem der vorhergehenden Ansprüche, das eingerichtet ist, die Verbindung mit einer Maschine (68) und/oder einer Vorrichtung (66) herzustellen.

## Revendications

1. Joint tournant (12) comprenant un élément cylindrique externe (14) présentant une première extrémité de connexion externe (16), un élément cylindrique interne (18) présentant une deuxième extrémité de connexion externe (20), et des moyens de roulement (22) disposés entre ledit élément cylindrique externe (14) et ledit élément cylindrique interne (18) de manière à définir un axe de rotation relatif (x) ;
un joint d'étanchéité (24) étant prévu entre ledit élément cylindrique externe (14) et ledit élément cylindrique interne (18) ; **caractérisé en ce que**
ledit élément cylindrique interne (18) fait saillie dans une direction radiale par rapport audit élément cylindrique externe (14), réalisant un logement radial (26) pour ledit joint d'étanchéité (24).

2. Joint tournant (12) selon la revendication précédente, **caractérisé en ce que** ledit élément cylindrique interne (18) faisant saillie dans une direction radiale par rapport audit élément cylindrique externe (14) comprend une première surface d'étanchéité (28) qui fait face radialement à une deuxième surface d'étanchéité (30) disposée sur ledit élément cylindrique externe (14) pour réaliser ledit logement radial (26) pour ledit joint d'étanchéité (24).

3. Joint tournant (12) selon la revendication précédente, **caractérisé en ce que** ledit élément cylindrique interne (18) est disposé avec une partie de tête (32) faisant saillie dans une direction radiale par rapport audit élément cylindrique externe (14), ladite partie de tête (32) étant disposée avec une partie terminale (34) faisant saillie dans la direction de l'axe (x) sur laquelle est réalisée ladite première surface d'étanchéité (28).

4. Joint tournant (12) selon l'une quelconque des revendications précédentes, **caractérisé en ce que** ledit logement radial (26) est réalisé avec une bouche conique (38) apte à maintenir le joint d'étanchéité (24) en position.

5. Joint tournant (12) selon la revendication précédente, **caractérisé en ce que** ladite conicité (26) est obtenue au moyen de ladite partie terminale (34) dudit élément cylindrique externe (14).

6. Joint tournant (12) selon l'une quelconque des revendications précédentes, **caractérisé en ce que** ledit élément cylindrique interne (18) comprend un corps principal (40) et un fond (42) reliés entre eux au moyen de vis (44).

7. Joint tournant (12) selon l'une quelconque des revendications précédentes, **caractérisé en ce que** lesdits moyens de roulement (22) comprennent deux roulements à billes (46, 48) décalés axialement.

8. Joint tournant (12) selon la revendication précédente, **caractérisé en ce que** ledit élément cylindrique externe (14) et ledit élément cylindrique interne (18) sont conformés pour réaliser les pistes de roulement pour les billes des roulements à billes (46, 48), ledit élément cylindrique externe (14) étant disposé avec une partie de diamètre interne réduit (50), et ledit élément cylindrique interne (18) étant réalisé avec deux parties de diamètre externe augmenté (52, 54) de manière à ce qu'entre la partie à diamètre réduit (50) et les parties à diamètre augmenté (52, 54), des pistes opposées soient réalisées dans une direction axiale sur lesquelles les billes des roulements à billes (46, 48) peuvent rouler.

9. Joint tournant (12) selon l'une quelconque des revendications précédentes, **caractérisé en ce qu'**il comprend un élément de fixation (70), apte à être relié à la première surface de connexion externe (16) au moyen de vis (72).

10. Joint tournant (12) selon l'une quelconque des revendications précédentes, **caractérisé en ce que** ledit joint d'étanchéité est réalisé en silicone adapté à un usage alimentaire.

11. Bras de suspension (64) comprenant au moins un joint tournant (12) selon l'une quelconque des revendications précédentes, agencé pour être relié à une machine (68) et/ou à un dispositif (66).
